# EUROPEAN PATENT APPLICATION

(11) **EP 4 815 112 A1**
(43) Date of publication of application: **30.09.2026**
(21) Application number: 24896027.0
(22) Date of filing: 11.10.2024
(51) Int. Cl.: H01M 10/617, H01M 10/613, H01M 10/625

(54) **BATTERY PACK AND ELECTRICAL DEVICE**

(30) Priority: 28.11.2023 CN 202323239375 U
(71) Applicant: BYD Company Limited, Shenzhen, Guangdong 518118 (CN)
(72) Inventor: SU, Bizhe, Shenzhen, Guangdong 518118 (CN); XIE, Xunhan, Shenzhen, Guangdong 518118 (CN); CAI, Yaomin, Shenzhen, Guangdong 518118 (CN)
(74) Representative: Taor, Simon Edward William
(86) International application number: PCT/CN2024/124138
(87) International publication number: WO 2025/112933

(57) **Abstract**

A battery pack (100) and an electrical device (1000). The battery pack (100) comprises a battery module (10) and a heat exchange assembly (20). The battery module (10) comprises a plurality of battery cells (11) arranged in a first direction (F1). Each battery cell (11) extends in a second direction (F2) and an electrode lead-out part is provided at an end portion of each battery cell (11). In the second direction (F2), the battery module (10) has first side edges (12) at the end portions of the electrode lead-out parts. The first direction (F1) and the second direction (F2) are perpendicular to each other. The heat exchange assembly (20) comprises first heat exchange flow channels (21) and second heat exchange flow channels (22) which are not in communication with each other. The first heat exchange flow channels (21) exchange heat with the end portions provided with the electrode lead-out parts. Each second heat exchange flow channel (22) is located on the sides of the first heat exchange flow channels (21) away from the first side edges (12). In the second direction (F2), the length of each battery cell (11) is L, the distance between the side of each first heat exchange flow channel (21) away from the corresponding first side edge (12) and the corresponding first side edge (12) is L1, and the battery pack (100) satisfies: 0.2L-^{<}-Ll.

## Description

### CROSS-REFERENCE TO RELATED APPLICATIONS

This application claims priority to the Chinese Patent Application with the application number 202323239375.7, filed on November 28, 2023. The entire content of the aforementioned Chinese patent application is incorporated herein by reference in its entirety.

### TECHNICAL FIELD

The present application relates to the technical field of electrical devices, and in particular to a battery pack and an electrical device.

### BACKGROUND ART

In the related art, batteries usually have high requirements for temperature. Working under high or low temperature conditions for a long time will degrade the service performance and service life of the battery. The battery is usually equipped with a temperature control component, which performs undifferentiated temperature control over the entire battery. However, in actual operation, for example, when the battery pack is fast charged with a large current, the temperature rise of different parts of the battery is different. For example, the temperature at both ends of the battery is higher than that in the middle, resulting in a large temperature difference between different parts of the battery.

### SUMMARY

The present application aims to solve at least one of the technical problems existing in the prior art. To this end, the present application proposes a battery pack to alleviate the problem of large temperature differences between different parts of the battery module.

A battery pack according to an embodiment of the present application includes: a battery module, the battery module includes a plurality of battery cells arranged in a first direction, each battery cell extends in a second direction and has an electrode lead-out part disposed at an end portion thereof, in the second direction, the end portion of the battery module with the electrode lead-out part arranged thereon has a first side edge, the first direction and the second direction are perpendicular to each other; a heat exchange assembly, the heat exchange assembly includes a first heat exchange flow channel and a second heat exchange flow channel that are not in communication with each other, the first heat exchange flow channel exchanges heat with the end portion with the electrode lead-out part arranged thereon, the second heat exchange flow channel is located on a side of the first heat exchange flow channel away from the first side edge, in the second direction, the length of the battery cell is L, the distance between the side of the first heat exchange flow channel away from the first side edge and the first side edge is L1, the battery pack satisfies: 0.2L ≤ L1.

A battery pack according to an embodiment of the present application, by providing a first heat exchange flow channel at the end portion of the battery module where the electrode lead-out part is provided, wherein the first heat exchange flow channel satisfies 0.2L≤L1, the first heat exchange flow channel can better cover the end portion of the battery module where the electrode lead-out part is provided, and the heat exchange assembly can more specifically control the temperature of the battery module, thereby improving the problem of large temperature difference between different parts of the battery module.

A battery pack according to some embodiments of the present application, the battery pack satisfies: 0.2L ≤ L1 ≤ 0.4L.

A battery pack according to some embodiments of the present application, a distance between the side of the first heat exchange flow channel facing the first side edge and the first side edge of the battery module is a, and a satisfies a ≤ 25 mm.

A battery pack according to some embodiments of the present application, a satisfies 15 mm ≤ a ≤ 25 mm.

A battery pack according to some embodiments of the present application, the first heat exchange flow channel includes a plurality of first flow channels spaced apart along the second direction, and the width of the first flow channel is c, the spacing between adjacent first flow channels is d, the number of the first flow channels in the first heat exchange flow channel is n, and L1=nc+(n-1)d+a.

A battery pack according to some embodiments of the present application, c satisfies 40 mm ≤ c ≤ 70 mm.

A battery pack according to some embodiments of the present application, at least two of the first flow channels are in communication to form a first series flow path, and one end of the first series flow path is an inlet and the other end is an outlet.

A battery pack according to some embodiments of the present application, the plurality of first flow channels are connected in parallel.

A battery pack according to some embodiments of the present application, the battery pack further includes a thermally conductive temperature equalization plate, and the temperature equalization plate is disposed between the heat exchange assembly and the battery module.

A battery pack according to some embodiments of the present application, the orthographic projection of the edge of the temperature equalization plate facing the first side edge on the surface of the battery module facing the temperature equalization plate is located inside the first side edge of the battery module.

A battery pack according to some embodiments of the present application, a distance between the edge of the temperature equalization plate facing the first side edge and the first side edge is b, and a distance between the side of the first heat exchange flow channel facing the first side edge and the first side edge of the battery module is a, and b < a.

A battery pack according to some embodiments of the present application, b satisfies 10 mm ≤ b ≤ 15 mm.

A battery pack according to some embodiments of the present application, in the second direction, the battery module has two first side edges disposed opposite to each other, and the first heat exchange flow channels are disposed between both sides of the second heat exchange flow channel and the corresponding first side edges.

A battery pack according to some embodiments of the present application, the second heat exchange flow channel includes a plurality of second flow channels spaced apart along the second direction.

A battery pack according to some embodiments of the present application, at least two of the second flow channels are in communication to form a second series flow path, and one end of the second series flow path is an inlet and the other end is an outlet; or the plurality of second flow channels are connected in parallel.

A battery pack according to some embodiments of the present application, the battery pack includes a plurality of battery modules, and the first heat exchange flow channel and the second heat exchange flow channel are disposed corresponding to each battery module.

A battery pack according to some embodiments of the present application, a plurality of the first heat exchange flow channels corresponding to the battery modules are connected in parallel, and a plurality of the second heat exchange flow channels are connected in parallel.

A battery pack according to some embodiments of the present application, the heat exchange assembly includes a plurality of harmonica tubes spaced apart along the second direction, and a portion of the harmonica tubes define the first heat exchange flow channel, and another portion of the harmonica tubes define the second heat exchange flow channel.

A battery pack according to some embodiments of the present application, the heat exchange assembly includes a flow channel plate and a base plate, the flow channel plate is formed with a flow channel groove therein, and the base plate covers an opening of the flow channel groove to define the first heat exchange flow channel and the second heat exchange flow channel.

The present application also proposes an electrical device including the above-mentioned battery pack.

The present application also proposes an electrical device, by providing a first heat exchange flow channel at the end of the battery module where the electrode lead-out part is provided, wherein the first heat exchange flow channel satisfies 0.2L ≤ L1, so that the first heat exchange flow channel better covers the end of the battery module where the electrode lead-out part is provided, and the heat exchange assembly more specifically controls the temperature of the battery module, thereby improving the problem of large temperature difference between different parts of the battery module.

Additional aspects and advantages of the present application will be given in part in the description below, and in part will become obvious from the description below, or will be learned through practice of the present application.

### BRIEF DESCRIPTION OF THE DRAWINGS

The above and/or additional aspects and advantages of the present application will become apparent and easily understood from the description of the embodiments in conjunction with the following drawings, in which:
FIG. 1 is an exploded view of a battery pack according to an embodiment of the present application;
FIG. 2 is a schematic assembly diagram of a battery module, a heat exchange assembly and a temperature equalization plate in an embodiment of the present application. Compared to the placement of the battery pack in FIG. 1, the battery pack in FIG. 2 is in an inverted posture.
FIG. 3 is a partial enlarged view of portion I in FIG. 2;
FIG. 4 is a schematic diagram of a battery pack according to an embodiment of the present application, wherein one battery module is hidden;
FIG. 5 shows experimental data when the battery pack satisfies L1 equal to 0.2L in an embodiment of the present application;
FIG. 6 shows experimental data when the battery pack satisfies L1 equal to 0.3L in an embodiment of the present application;
FIG. 7 shows experimental data when the battery pack satisfies L1 equal to 0.4L in an embodiment of the present application;
FIG. 8 shows the experimental data when the battery pack in the comparative example satisfies L1 equal to 0.17L;

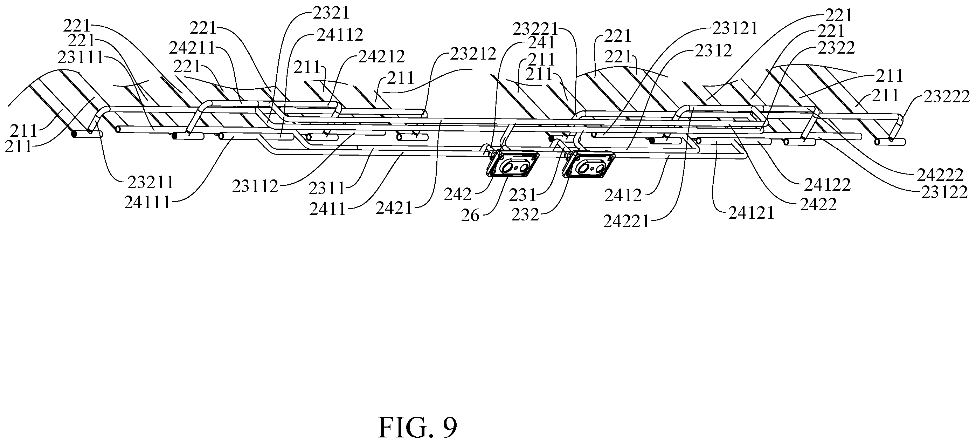

FIG. 9 is a schematic diagram showing the connection relationship between the first flow channel, the second flow channel and each pipe in an embodiment of the present application;

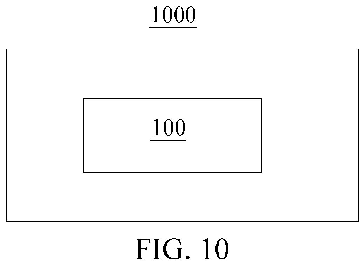

FIG. 10 is a schematic diagram of an electrical device according to an embodiment of the present application.

Reference numerals:
1000, electrical device;
100, battery pack;
10, battery module; 11, battery cell; 12, first side edge;
20, heat exchange assembly; 21, first heat exchange flow channel; 211, first flow channel; 22, second heat exchange flow channel; 221, second flow channel; 23, first pipe; 24, second pipe; 25, first connector; 26, second connector; 231, third pipe; 2311, fourth pipe; 23111, fifth pipe; 23112, sixth pipe; 2312, seventh pipe; 23121, eighth pipe; 23122, ninth pipe; 232, tenth pipe; 2321, eleventh pipe; 23211, twelfth pipe; 23212, thirteenth pipe; 2322, fourteenth pipe; 23221, fifteenth pipe; 23222, sixteenth pipe; 241, seventeenth pipe; 2411, eighteenth pipe; 24111, nineteenth pipe; 24112, twentieth pipe; 2412, twenty-first pipe; 24121, twenty-second pipe; 24122, twenty-third pipe; 242, twenty-fourth pipe; 2421, twenty-fifth pipe; 21211, twenty-sixth pipe; 24212, twenty-seventh pipe; 2422, twenty-eighth pipe; 24221, twenty-ninth pipe; 24222, thirtieth pipe;
30, temperature equalization plate;
F1, first direction; F2, second direction.

### DETAILED DESCRIPTION

The following describes in detail the embodiments of the present application. Examples of the embodiments are illustrated in the accompanying drawings, wherein the same or similar reference numerals throughout the specification denote the same or similar elements or elements having the same or similar functions. The embodiments described below with reference to the accompanying drawings are exemplary, and are only used to explain the present application, and shall not be construed as limiting the present application.

In the description of the present application, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like indicate the orientation or positional relationship based on the orientation or positional relationship shown in the accompanying drawings, which are only for the convenience of describing the present application and simplifying the description, rather than indicating or implying that the referred device or element must have a specific orientation, be constructed and operated in a specific orientation. Therefore, these terms cannot be construed as limiting the present application. In addition, features defined with "first" and "second" may explicitly or implicitly include one or more of such features. In the description of the present application, unless otherwise specified, "a plurality of" means two or more.

In the description of the present application, it should be noted that, unless otherwise clearly specified and limited, the terms "mounted", "connected" and "coupled" shall be interpreted in a broad sense. For example, it may be a fixed connection, a detachable connection, or an integral connection; it may be a mechanical connection or an electrical connection; it may be a direct connection, or an indirect connection through an intermediate medium, or may be internal communication between two elements. For those of ordinary skill in the art, the specific meanings of the above terms in the present application can be understood according to specific circumstances.

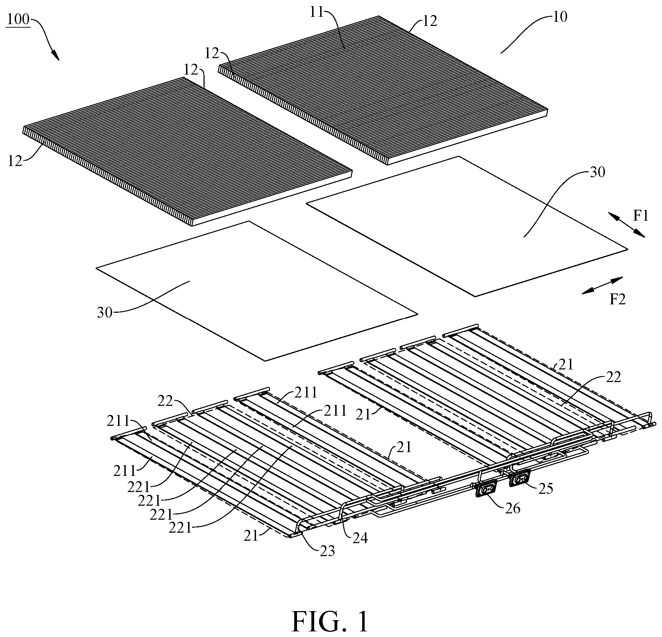

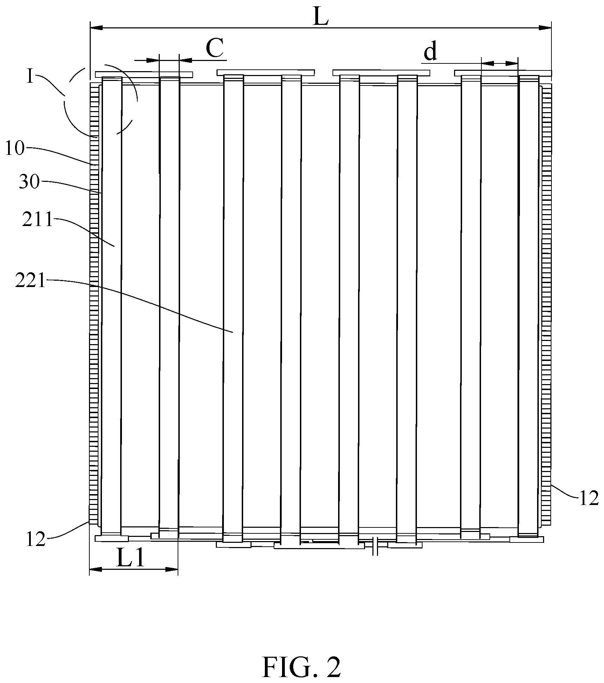

The battery pack (100) according to the embodiment of the present application is described below with reference to FIG. 1 to FIG. 4, where the battery pack (100) is applied to an electrical device, and the electrical device is not limited to vehicles, but may also be any equipment requiring electricity such as ships.

As shown in FIG. 1 to FIG. 3, the battery pack (100) according to the embodiment of the present application includes a battery module (10) and a heat exchange assembly (20).

The battery module (10) includes a plurality of battery cells (11) stacked and arranged along a first direction (F1). Each battery cell (11) extends along a second direction (F2), and an end portion of the battery cell (11) is provided with an electrode lead-out part. In the second direction (F2), the end portion of the battery module (10) provided with the electrode lead-out part has a first side edge (12). The first direction (F1) and the second direction (F2) are perpendicular to each other.

That is, the battery module (10) includes a plurality of battery cells (11), the battery cells (11) are stacked in the first direction (F1), and the battery cells (11) extend along the second direction (F2). For example, the first direction (F1) is the thickness direction of the battery cells (11), the second direction (F2) is the length direction of the battery cells (11), and the thickness direction is perpendicular to the length direction. Of course, the first direction (F1) and the second direction (F2) may also be other directions as long as the above requirements are met, which will not be repeated here.

The electrode lead-out part may be a pole post, a tab, or other components for leading out an electrode.

Specifically, the electrode lead-out part may be provided on the first side edge (12), or may be provided on several surfaces close to the first side edge (12).

In the related art, power batteries usually have high requirements for temperature. Long-term operation under high or low temperature conditions will reduce the service performance and service life of the power battery. A temperature control component is usually provided on the power battery to perform undifferentiated temperature control on the entire power battery. However, in actual operation, for example, when the battery pack is charged with a large current at a high speed, the temperature rise of different parts on the power battery is different. For example, the temperature of the areas where the pole posts are arranged at both ends of the power battery is higher than that of the middle part, resulting in a large temperature difference between different parts on the power battery.

The heat exchange assembly (20) includes a first heat exchange flow channel (21) and a second heat exchange flow channel (22) that are not in communication with each other. The first heat exchange flow channel (21) exchanges heat with the end portion provided with the electrode lead-out part, and the second heat exchange flow channel (22) is located on a side of the first heat exchange flow channel (21) away from the first side edge (12). In the second direction (F2), the length of the battery cell (11) is L, the distance between a side of the first heat exchange flow channel (21) away from the first side edge (12) and the first side edge (12) is L1, and the battery pack (100) satisfies the relationship: 0.2L ≤ L1.

It can be understood that, along the second direction, when the first heat exchange flow channel (21) is arranged for the left end of the battery module (10), L1 is the distance between the right side edge of the first heat exchange flow channel (21) and the left side edge of the battery module (10). When the first heat exchange flow channel (21) is arranged for the right end of the battery module (10), L1 is the distance between the left side edge of the first heat exchange flow channel (21) and the right side edge of the battery module (10).

In the present application, by arranging the first heat exchange flow channel (21) corresponding to the pole region, where the first heat exchange flow channel (21) satisfies 0.2L ≤ L1, the first heat exchange flow channel (21) can well cover the end portion of the battery module (10) provided with the electrode lead-out part, so that the heat exchange assembly (20) can control the temperature of the battery module (10) more targeted, and alleviate the problem of large temperature difference between different parts on the battery module (10).

In the related art, during the operation of the battery pack, the heat generation amount of the end portion of the battery module (10) provided with the electrode lead-out part is significantly higher than that of other parts. In the present application, the first heat exchange flow channel (21) is used to exchange heat with the end portion of the battery module (10) provided with the electrode lead-out part, and the second heat exchange flow channel (22) which is not in communication with the first heat exchange flow channel (21) is used to exchange heat with other parts, so as to more targeted control the temperature of the end portion of the battery module (10) provided with the electrode lead-out part, and improve the pertinence of temperature control.

With 0.2L ≤ L1, the first heat exchange flow channel (21) has a sufficient range to cover the high temperature area on the battery module (10), that is, the end portion of the battery module (10) provided with the electrode lead-out part, which improves the problem of large temperature difference between different parts on the battery module (10), and further improves the temperature uniformity of the battery pack.

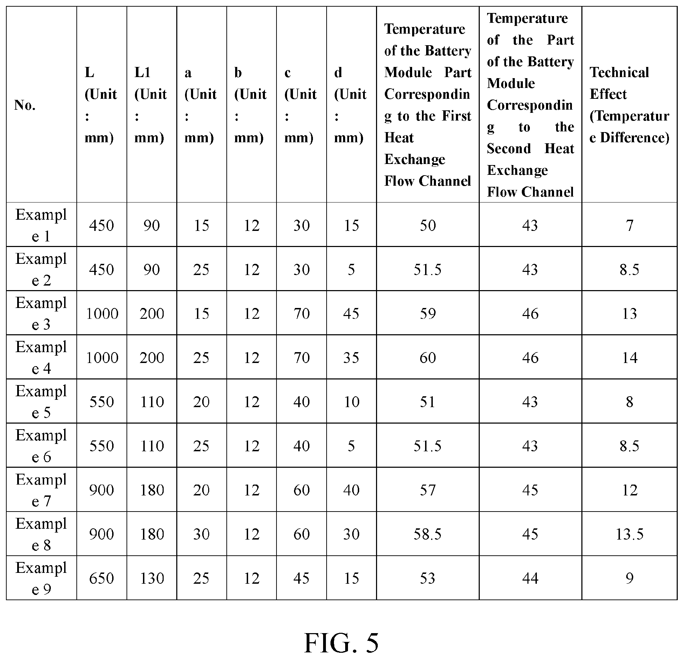

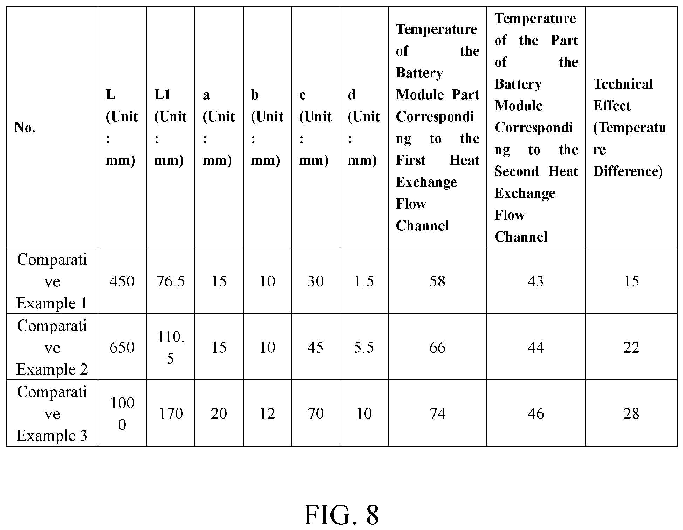

After a large number of experimental data, the inventors of the present application found that in the related art, if L1 is too small, the first heat exchange flow channel cannot well cover the end portion of the battery module provided with the electrode lead-out part, and cannot effectively dissipate heat from the high temperature area on the battery module, resulting in a large temperature difference between different parts of the battery module. As shown in Comparative Example 1, Comparative Example 2 and Comparative Example 3 in FIG. 8, the temperature difference is generally greater than 15 degrees Celsius. In the present application, by setting L1 to be greater than or equal to 0.2L, it is sufficient to cover the high temperature area on the battery module (10), and the temperature difference is generally small. As shown in FIG. 5 to FIG. 7, in Embodiment 1 to Embodiment 27 of the present application, the maximum temperature difference is 14 degrees Celsius in Embodiment 4, and the minimum temperature difference is 1 degree Celsius in Embodiment 19, both of which are lower than the 15 degrees Celsius temperature difference in the related art. The effect of improving the temperature difference of the present application can be clearly seen.

For example, L1 is 0.2L; or L1 is 0.21L; or L1 is 0.22L; or L1 is 0.23L; or L1 is 0.24L; or L1 is 0.25L; or a larger value, which will not be repeated here.

According to the battery pack (100) of the embodiment of the present application, by arranging the first heat exchange flow channel (21) corresponding to the end portion of the battery module (10) provided with the electrode lead-out part, where the first heat exchange flow channel (21) satisfies 0.2L ≤ L1, the first heat exchange flow channel (21) can well cover the end portion of the battery module (10) provided with the electrode lead-out part, so that the heat exchange assembly (20) can control the temperature of the battery module (10) more targeted, and alleviate the problem of large temperature difference between different parts on the battery module (10).

According to some embodiments of the present application, the heat exchange assembly (20) is connected to an air conditioning subsystem in a thermal management system of a vehicle, and uses a refrigerant in the air conditioning subsystem to exchange heat with the battery module (10) so as to adjust the temperature, where the air conditioning subsystem is used to adjust the temperature in the cabin of the vehicle.

According to some embodiments of the present application, 450 mm ≤ L ≤ 600 mm, and the length of the battery cell (11) is relatively short.

With reference to FIG. 5 to FIG. 8, according to some embodiments of the present application, 0.2L ≤ L1 ≤ 0.4L. By setting 0.2L ≤ L1 ≤ 0.4L, the pertinence of temperature control is further improved, the temperature difference is generally small, and energy waste is avoided at the same time.

After a large number of experimental data, the inventors of the present application found that in the related art, if L1 is too large, the influence range of the first heat exchange flow channel will be excessively large (for example, heat will be dissipated from other parts with low heat generation), resulting in energy waste.

For example, L1 is 0.2L; or L1 is 0.21L; or L1 is 0.22L; or L1 is 0.23L; or L1 is 0.24L; or L1 is 0.25L; or L1 is 0.26L; or L1 is 0.27L; or L1 is 0.28L; or L1 is 0.29L; or L1 is 0.30L; or L1 is 0.31L; or L1 is 0.32L; or L1 is 0.33L; or L1 is 0.34L; or L1 is 0.35L; or L1 is 0.36L; or L1 is 0.37L; or L1 is 0.38L; or L1 is 0.39L; or L1 is 0.40L.

According to some embodiments of the present application, the distance between a side of the first heat exchange flow channel (21) facing the first side edge (12) and the first side edge (12) of the battery module (10) is a, and a satisfies a ≤ 25 mm. By setting the distance a between the side of the first heat exchange flow channel (21) facing the first side edge (12) and the first side edge (12) of the battery module (10) to be less than or equal to 25 mm, as shown in FIG. 5 to FIG. 7, the problem of poor heat exchange effect caused by excessive distance is avoided.

According to some embodiments of the present application, a satisfies 15 mm ≤ a ≤ 25 mm. By setting a within the range of 15 mm to 25 mm, the first heat exchange flow channel (21) maintains a certain distance from the first side edge (12) of the battery module (10), so that the structural stability is better, and the problem of poor heat exchange effect caused by excessive distance is avoided.

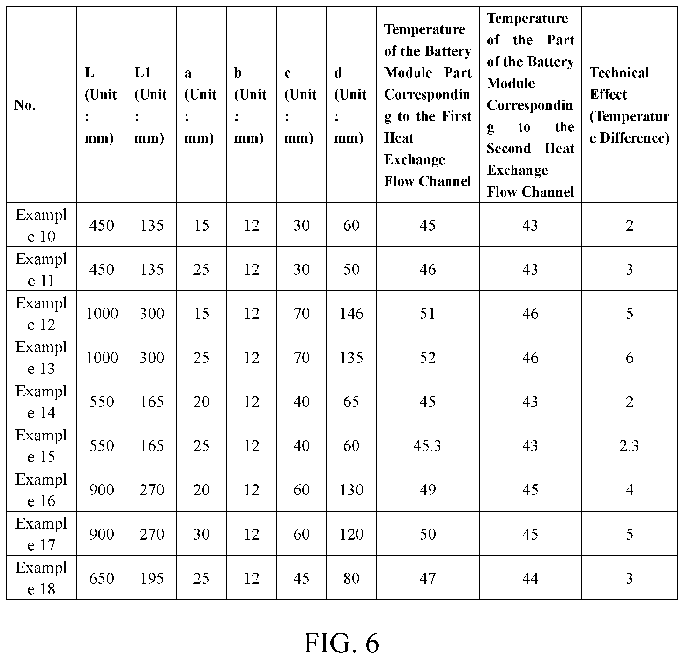

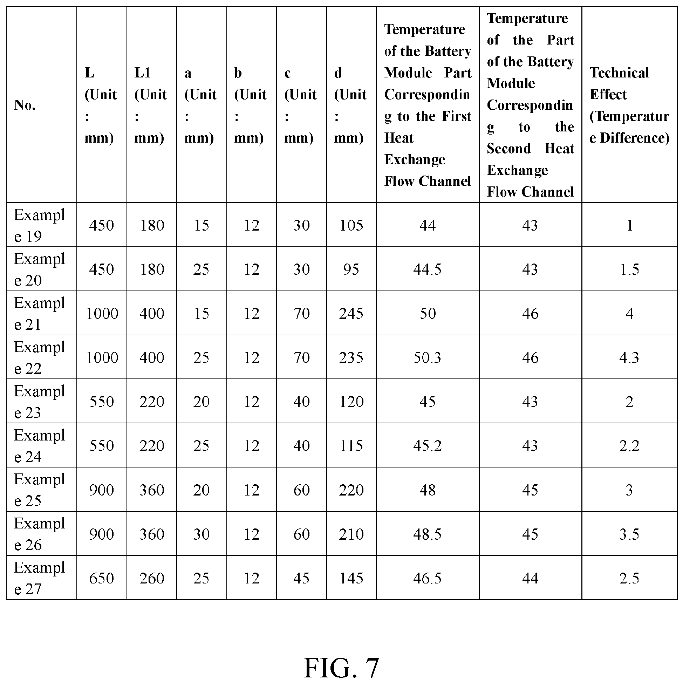

Specifically, in the related art, if the distance between the first heat exchange flow channel and the first side edge of the battery module is too small, the overall structural stability will be poor; in the related art, referring to Embodiment 7 and Embodiment 8 in FIG. 5, Embodiment 16 and Embodiment 17 in FIG. 6, and Embodiment 25 and Embodiment 26 in FIG. 7, if the distance between the first heat exchange flow channel and the first side edge of the battery module is too large, the heat exchange effect between the first heat exchange flow channel and the first side edge of the battery module will be poor, which affects the temperature control effect.

For example, the distance a between the first heat exchange flow channel (21) and the first side edge (12) of the battery module (10) is 15 mm; or a is 16 mm; or a is 17 mm; or a is 18 mm; or a is 19 mm; or a is 20 mm; or a is 21 mm; or a is 22 mm; or a is 23 mm; or a is 24 mm; or a is 25 mm.

As shown in FIG. 1, FIG. 2 and FIG. 4, according to some embodiments of the present application, the first heat exchange flow channel (21) includes a plurality of first flow channels (211) spaced apart along the second direction (F2), the width of the first flow channel (211) is c, the spacing between adjacent first flow channels (211) is d, the number of the first flow channels (211) in the first heat exchange flow channel (21) is n, the distance between the first heat exchange flow channel (21) and the first side edge (12) of the battery module (10) is a, and L1=nc+(n-1)d+a. By specifically limiting the specific structure of the first heat exchange flow channel (21), the plurality of first flow channels (211) are arranged neatly, with a simple and orderly structure, which improves the heat exchange effect between the first heat exchange flow channel (21) and the end portion of the battery module (10) provided with the electrode lead-out part. Compared with the heat exchange plate body in the related art that completely covers the end portion of the battery module provided with the electrode lead-out part, arranging a plurality of spaced first flow channels (211) not only ensures the heat exchange effect, but also reduces the cost.

Wherein, the first heat exchange flow channel (21) includes a plurality of first flow channels (211) spaced apart along the second direction (F2). That is, the first heat exchange flow channel (21) may include two first flow channels (211) spaced apart along the second direction (F2), or three first flow channels (211) spaced apart along the second direction (F2), or even more first flow channels (211) spaced apart along the second direction (F2). The arrangement of the plurality of first flow channels (211) makes the temperature regulation effect of the first heat exchange flow channel (21) more uniform.

For example, the first heat exchange flow channel (21) includes two first flow channels (211) spaced apart along the length direction of the battery cell (11), where the length direction of the battery cell (11) is the second direction (F2). The width c of both first flow channels (211) is 55 mm, the spacing d between the two first flow channels (211) is 6 mm, the number n of the first flow channels (211) in the first heat exchange flow channel (21) is 2, the distance a between the first heat exchange flow channel (21) and the first side edge (12) of the battery module (10) is 20 mm, and L1=nc+(n-1)d+a, that is, L1 is 136 mm. The first heat exchange flow channel (21) can well cover the end portion of the battery module (10) provided with the electrode lead-out part.

According to some embodiments of the present application, c satisfies 40 mm ≤ c ≤ 70 mm. By setting the range of the width c of the first flow channel (211) to control the width of the first flow channel (211), energy waste is avoided while ensuring the influence range of the first flow channel (211), and the matching degree between the battery module (10) and the heat exchange assembly (20) is improved.

Specifically, in the related art, if the width c of the first flow channel is too small, the influence range of the first flow channel is small, which may cause the problem of temperature difference between different parts of the battery module; in the related art, if the width c of the first flow channel is too large, it will occupy a large space, increase the weight, and cause energy waste.

For example, the width c of the first flow channel (211) is 40 mm; or c is 45 mm; or c is 50 mm; or c is 55 mm; or c is 60 mm; or c is 65 mm; or c is 70 mm.

In some embodiments of the present application, the first flow channel (211) is defined by a harmonica heat exchange tube, that is, the first flow channel (211) includes a plurality of microchannels connected in parallel, so that the heat exchange effect can be further improved.

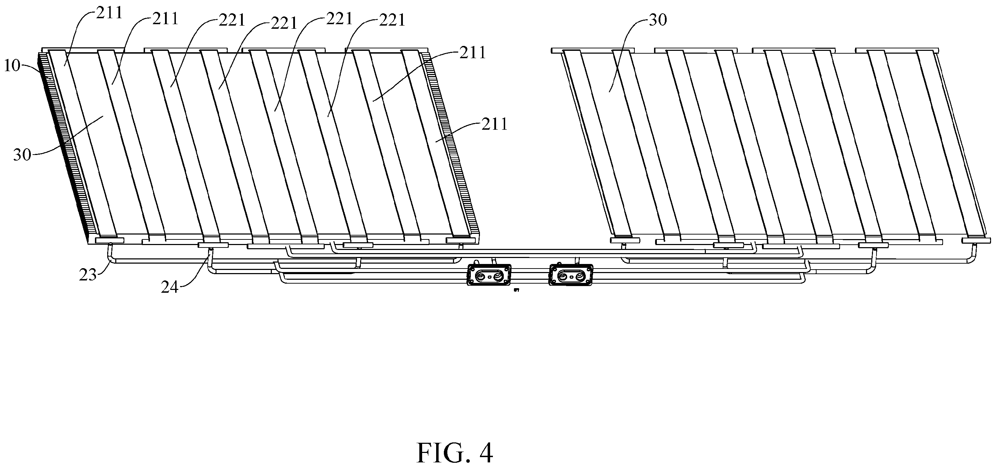

As shown in FIG. 1 and FIG. 4, according to some embodiments of the present application, at least two first flow channels 211 are communicated to form a first series flow path, where one end of the first series flow path serves as an inlet and the other end serves as an outlet. By arranging at least two first flow channels 211 to be communicated to form the first series flow path, the heat exchange effect of the heat exchange medium in the first flow channels 211 is fully exerted, the utilization rate is improved, and such a reflow-type flow channel design reduces the number of flow diversions, enabling better control over the flow rate of the heat exchange medium.

Specifically, a heat exchange medium flows through the first flow channels 211, and at least two first flow channels 211 are communicated to form a first series flow path, that is, the flow path of the heat exchange medium is longer, allowing the heat exchange medium to fully exchange heat with the battery module 10.

Herein, at least two first flow channels 211 are communicated to form a first series flow path, that is, two first flow channels 211 may be communicated to form a first series flow path, three first flow channels 211 may be communicated to form a first series flow path, or more first flow channels 211 may be communicated to form a first series flow path.

According to some embodiments of the present application, a plurality of first flow channels 211 are connected in parallel. By arranging the plurality of first flow channels 211 to be connected in parallel, the heat exchange efficiency is improved, and the temperature of the battery module 10 can be adjusted more rapidly.

For example, the plurality of first flow channels 211 include a first flow channel A and a first flow channel B, where the first flow channel A has an inlet and an outlet, the first flow channel B has an inlet and an outlet, the inlet of the first flow channel A and the inlet of the first flow channel B are located at a first end of the battery module 10, and the outlet of the first flow channel A and the outlet of the first flow channel B are located at a second end of the battery module 10 opposite to the first end.

As shown in FIG. 1 to FIG. 4, according to some embodiments of the present application, the battery pack 100 further includes a thermally conductive temperature equalization plate 30, and the temperature equalization plate 30 is disposed between the heat exchange assembly 20 and the battery module 10. By arranging the temperature equalization plate 30 between the heat exchange assembly 20 and the battery module 10, the temperature of the battery module 10 can be adjusted more uniformly by means of the temperature equalization plate 30. Specifically, the temperature equalization plate 30 may be a part made of a metal material.

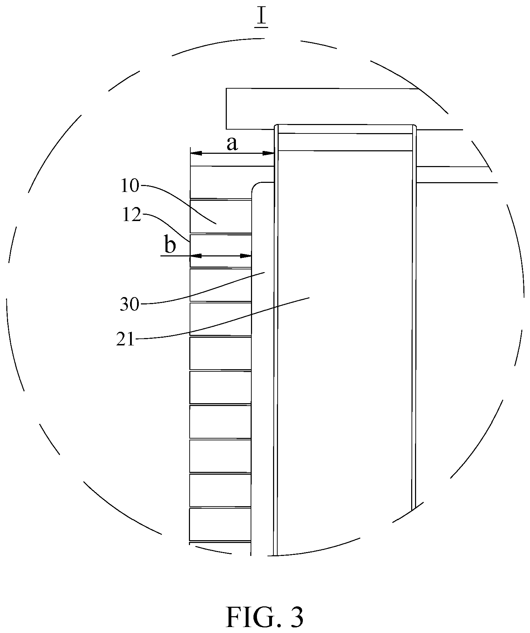

As shown in FIG. 3, according to some embodiments of the present application, an orthographic projection of an edge of the temperature equalization plate 30 facing the first side edge 12 on a surface of the battery module 10 facing the temperature equalization plate 30 is located inside the first side edge 12 of the battery module 10. By arranging the orthographic projection of the edge of the temperature equalization plate 30 facing the first side edge 12 on the surface of the battery module 10 facing the temperature equalization plate 30 to be located inside the first side edge 12 of the battery module 10, heat can be fully applied to the battery module 10, the utilization rate of the heat exchange assembly 20 is improved, and energy waste is avoided.

As shown in FIG. 3, according to some embodiments of the present application, a spacing between the edge of the temperature equalization plate 30 and the first side edge 12 of the battery module 10 is b, a spacing between the first heat exchange flow channel 21 and the first side edge 12 of the battery module 10 is a, and b < a. By setting b < a, that is, the edge of the first heat exchange flow channel 21 is located inside the temperature equalization plate 30, the heat of the first heat exchange flow channel 21 can fully act on the temperature equalization plate 30, which further improves the utilization rate of the heat exchange assembly 20 and avoids energy waste.

According to some embodiments of the present application, the length of the battery cell 11 is L, the length of the temperature equalization plate 30 is X, and X=L-2b.

According to some embodiments of the present application, b satisfies 10 mm ≤ b ≤ 15 mm. By setting 10 mm ≤ b ≤ 15 mm, a certain distance is kept between the edge of the temperature equalization plate 30 and the first side edge 12, which reduces the probability of colloid overflowing to the poles of the battery cells 11, while ensuring the effective coverage area of the temperature equalization plate 30.

In the related art, poles are provided at both ends of the battery cells, and the battery module is usually bonded to the temperature equalization plate by using colloid. As shown in FIG. 4, during assembly, the battery module is generally located below the temperature equalization plate, and the colloid between the battery module and the temperature equalization plate may overflow onto the poles at both ends of the battery cells. In the present application, by setting 10 mm ≤ b ≤ 15 mm, a certain distance is kept between the edge of the temperature equalization plate 30 and the first side edge 12, thereby reducing the probability of colloid overflowing to the poles of the battery cells 11.

For example, the spacing b between the edge of the temperature equalization plate 30 and the first side edge 12 of the battery module 10 is 10 mm; or the spacing b between the edge of the temperature equalization plate 30 and the first side edge 12 of the battery module 10 is 11 mm; or the spacing b between the edge of the temperature equalization plate 30 and the first side edge 12 of the battery module 10 is 12 mm; or the spacing b between the edge of the temperature equalization plate 30 and the first side edge 12 of the battery module 10 is 13 mm; or the spacing b between the edge of the temperature equalization plate 30 and the first side edge 12 of the battery module 10 is 14 mm; or the spacing b between the edge of the temperature equalization plate 30 and the first side edge 12 of the battery module 10 is 15 mm.

As shown in FIG. 1 and FIG. 4, according to some embodiments of the present application, the heat exchange assembly 20 further includes a second heat exchange flow channel 22, and the second heat exchange flow channel 22 exchanges heat with a region of the battery module 10 other than the end portions. By arranging the second heat exchange flow channel 22 to exchange heat with the region of the battery module 10 other than the end portions, targeted heat exchange is performed on different regions of the battery module 10, which further alleviates and improves the problem of large temperature differences between different parts of the battery module 10, and further improves the temperature uniformity of the battery pack.

Further, since the first heat exchange flow channel 21 and the second heat exchange flow channel 22 are not communicated with each other, the flow rate of the heat exchange medium entering the first heat exchange flow channel 21 and the second heat exchange flow channel 22 can be independently adjusted. For example, the flow rate of the heat exchange medium in the first heat exchange flow channel 21 is set to be higher than that in the second heat exchange flow channel 22, thereby further improving the temperature uniformity.

As shown in FIG. 1 and FIG. 4, according to some embodiments of the present application, in the second direction F2, the battery module 10 has two first side edges 12 arranged opposite to each other, and the first heat exchange flow channels 21 are provided between both sides of the second heat exchange flow channel 22 and the corresponding first side edges 12. By arranging the first heat exchange flow channels 21 between both sides of the second heat exchange flow channel 22 and the corresponding first side edges 12, the first heat exchange flow channels 21 on both sides respectively correspond to the electrode lead-out parts at both ends of the battery cell 11, which further alleviates and improves the problem of large temperature differences between different parts of the battery module 10, and further improves the temperature uniformity of the battery pack.

Specifically, the spacing between the edge of the temperature equalization plate 30 and the two first side edges 12 of the battery module 10 is also b, that is, the spacing between the two sides of the temperature equalization plate 30 and the two sides of the battery module 10 is the same, and the two sides are symmetrical.

As shown in FIG. 1, FIG. 2 and FIG. 4, according to some embodiments of the present application, the second heat exchange flow channel 22 includes a plurality of second flow channels 221 arranged at intervals along the second direction F2. By arranging a plurality of second flow channels 221 spaced apart along the second direction F2, and using the plurality of second flow channels 221 to exchange heat with parts of the battery module 10 other than the end portions, compared with the solution of a large-area heating plate in the related art, the present application fully utilizes the capacity of the heat exchange assembly 20 and improves the uniformity of temperature regulation.

Herein, the second heat exchange flow channel 22 includes a plurality of second flow channels 221 arranged at intervals along the second direction F2, that is, the second heat exchange flow channel 22 may include two second flow channels 221 spaced apart along the second direction F2, or three second flow channels 221 spaced apart along the second direction F2, or more second flow channels 221 spaced apart along the second direction F2.

For example, the second direction F2 is the length direction of the battery cell 11, and the second heat exchange flow channel 22 includes two second flow channels 221 spaced apart along the length direction of the battery cell 11, where the two second flow channels 221 regulate the temperature of different parts of the battery cell 11 in the length direction; or the second direction F2 is the length direction of the battery cell 11, and the second heat exchange flow channel 22 includes three second flow channels 221 spaced apart along the length direction of the battery cell 11, where the three second flow channels 221 regulate the temperature of different parts of the battery cell 11 in the length direction; or the second direction F2 is the length direction of the battery cell 11, and the second heat exchange flow channel 22 includes more second flow channels 221 spaced apart along the length direction of the battery cell 11, where the more second flow channels 221 regulate the temperature of different parts of the battery cell 11 in the length direction.

According to some embodiments of the present application, the width of the second flow channel 221 is the same as that of the first flow channel 211, and the spacing between adjacent second flow channels 221 is also d.

Specifically, the spacing between the first flow channel 211 and the second flow channel 221 is d, that is, the spacing between two adjacent first flow channels 211 is equal to the spacing between the first flow channel 211 and the second flow channel 221.

In some embodiments of the present application, the second flow channel 221 may be defined by a harmonica heat exchange tube, that is, the second flow channel 221 includes a plurality of micro-channels connected in parallel, thereby further improving the heat exchange effect.

As shown in FIG. 1 and FIG. 4, according to some embodiments of the present application, at least two second flow channels 221 are communicated to form a second series flow path, where one end of the second series flow path serves as an inlet and the other end serves as an outlet. By arranging at least two second flow channels 221 to be communicated to form the second series flow path, the heat exchange effect of the heat exchange medium in the second flow channels 221 is fully exerted, the utilization rate is improved, and such a reflow-type flow channel design reduces the number of flow diversions, enabling better control over the flow rate of the heat exchange medium.

Specifically, a heat exchange medium flows through the second flow channels 221, and at least two second flow channels 221 are communicated to form a second series flow path, that is, the flow path of the heat exchange medium is longer, allowing the heat exchange medium to fully exchange heat with the battery module 10.

Herein, at least two second flow channels 221 are communicated to form a second series flow path, that is, two second flow channels 221 may be connected in series to form a second series flow path, three second flow channels 221 may be connected in series to form a second series flow path, or more second flow channels 221 may be connected in series to form a second series flow path.

According to other embodiments of the present application, a plurality of second flow channels 221 are connected in parallel. By arranging the plurality of second flow channels 221 to be connected in parallel, the heat exchange efficiency is improved, and the temperature of the battery module 10 can be adjusted more rapidly.

For example, the plurality of second flow channels 221 include a second flow channel A and a second flow channel B, where the second flow channel A has an inlet and an outlet, the second flow channel B has an inlet and an outlet, the inlet of the second flow channel A and the inlet of the second flow channel B are both located at a first end of the battery module 10, and the outlet of the second flow channel A and the outlet of the second flow channel B are both located at a second end of the battery module 10 opposite to the first end.

As shown in FIG. 1 and FIG. 4, according to some embodiments of the present application, there are a plurality of battery modules 10, and each battery module 10 is correspondingly provided with a first heat exchange flow channel 21 and a second heat exchange flow channel 22. For each battery module 10, the first heat exchange flow channel 21 and the second heat exchange flow channel 22 are provided. The first heat exchange flow channel 21 exchanges heat with the end portion of the battery module provided with the electrode lead-out part, and the second heat exchange flow channel 22 exchanges heat with the part of the battery module 10 other than the end portion. This enables the heat exchange assembly 20 to control the temperature of the battery module 10 more targeted, improves the problem of large temperature differences between different parts of the battery module 10, optimizes the overall performance of the battery, and enhances the temperature uniformity of the battery.

For example, there are two battery modules 10, and each battery module 10 is correspondingly provided with two first heat exchange flow channels 21 and one second heat exchange flow channel 22. The two first heat exchange flow channels 21 respectively exchange heat with the end portions of the battery module, and the second heat exchange flow channel 22 exchanges heat with the middle part of the battery module 10 other than the end portions; or there are three battery modules 10, and each battery module 10 is correspondingly provided with two first heat exchange flow channels 21 and one second heat exchange flow channel 22. The two first heat exchange flow channels 21 respectively exchange heat with the end portions of the battery module 10, and the second heat exchange flow channel 22 exchanges heat with the part of the battery module 10 other than the end portions; or there are more battery modules 10, and each battery module 10 is correspondingly provided with two first heat exchange flow channels 21 and one second heat exchange flow channel 22. The two first heat exchange flow channels 21 respectively exchange heat with the end portions of the battery module 10, and the second heat exchange flow channel 22 exchanges heat with the part of the battery module 10 other than the end portions.

As shown in FIG. 1 and FIG. 4, according to some embodiments of the present application, the first heat exchange flow channels 21 corresponding to a plurality of battery modules 10 are connected in parallel, and the plurality of second heat exchange flow channels 22 are connected in parallel. By arranging the first heat exchange flow channels 21 corresponding to the plurality of battery modules 10 to be connected in parallel and the plurality of second heat exchange flow channels 22 to be connected in parallel, compared with the solution where the first heat exchange flow channels 21 corresponding to the plurality of battery modules 10 are connected in series, the first heat exchange flow channels 21 corresponding to different battery modules 10 can be independently controlled, which enables more flexible temperature regulation for different battery modules 10 and further improves the temperature uniformity of the battery pack.

For example, there are two battery modules 10, including a first battery module 10 and a second battery module 10. The first battery module 10 is correspondingly provided with a first heat exchange flow channel A and a first heat exchange flow channel B, and the second battery module 10 is correspondingly provided with a first heat exchange flow channel C and a first heat exchange flow channel D. The first heat exchange flow channel A, the first heat exchange flow channel B, the first heat exchange flow channel C and the first heat exchange flow channel D are connected in parallel. The first battery module 10 is correspondingly provided with a second heat exchange flow channel A, and the second battery module is correspondingly provided with a second heat exchange flow channel B, where the second heat exchange flow channel A and the second heat exchange flow channel B are connected in parallel.

According to some embodiments of the present application, the first heat exchange flow channels 21 corresponding to the plurality of battery modules 10 are connected in series, and the plurality of second heat exchange flow channels 22 are connected in series. By arranging the first heat exchange flow channels 21 corresponding to the plurality of battery modules 10 to be connected in series and the plurality of second heat exchange flow channels 22 to be connected in series, the control method is simplified.

According to some embodiments of the present application, the heat exchange assembly 20 includes a first heat exchange element and a second heat exchange element. The first heat exchange element is configured as a hollow structure to define the first flow channel 211, and the second heat exchange element is configured as a hollow structure to define the second flow channel 221.

Specifically, the first heat exchange element is a first harmonica tube, which defines the first flow channel 211, and the second heat exchange element is a second harmonica tube, which defines the second flow channel 221. This enhances the mechanical strength without compromising the lightweight design.

As shown in FIG. 1 and FIG. 4, according to some embodiments of the present application, the heat exchange assembly 20 further includes a first pipe 23 and a second pipe 24. The first pipe 23 is communicated with the first flow channel 211 to guide the heat exchange medium to flow into or out of the first flow channel 211, and the second pipe 24 is communicated with the second flow channel 221 to guide the heat exchange medium to flow into or out of the second flow channel 221.

Specifically, the first pipe 23 is configured as a first metal pipe, and the second pipe 24 is configured as a second metal pipe. For example, the first metal pipe is made of aluminum, and the second metal pipe is made of aluminum.

As shown in FIG. 1 and FIG. 4, according to some embodiments of the present application, the heat exchange assembly 20 further includes a first connector 25 and a second connector 26. The first connector 25 is communicated with the first pipe 23, and the second connector 26 is communicated with the second pipe 24. The first connector 25 and the second connector 26 are located on the same side of the battery module 10. By arranging the first connector 25 and the second connector 26 on the same side of the battery module 10, the heat exchange assembly is compatible with the corresponding electrical device, such as a vehicle with inlet and outlet water pumps arranged on the same side.

Specifically, there are a plurality of battery modules 10, and a plurality of temperature equalization plates 30 are arranged corresponding to the battery modules 10. The first connector 25 is located between two adjacent temperature equalization plates 30, and the second connector 26 is located between two adjacent temperature equalization plates 30, so that the amount of heat exchange medium received by the plurality of battery modules 10 is more uniform. For example, there are two battery modules 10, two temperature equalization plates 30 are arranged corresponding to the battery modules 10, the first connector 25 is located between the two temperature equalization plates 30, and the second connector 26 is located between the two temperature equalization plates 30.

According to other embodiments of the present application, the heat exchange assembly 20 further includes a third connector and a fourth connector. The first flow channel 211 has an inlet and an outlet, and the second flow channel 221 has an inlet and an outlet. The third connector is communicated with the inlet of the first flow channel 211 and the inlet of the second flow channel 221, and the fourth connector is communicated with the outlet of the first flow channel 211 and the outlet of the second flow channel 221. The third connector and the fourth connector are located on opposite sides of the battery module 10. By arranging the third connector and the fourth connector on the opposite sides of the battery module 10, the heat exchange assembly is compatible with the corresponding electrical device, such as a vehicle with inlet and outlet water pumps arranged on opposite sides.

Specifically, the third connector is provided with a first nozzle and a second nozzle, where the first nozzle is correspondingly communicated with the inlet of the first flow channel 211, and the second nozzle is correspondingly communicated with the inlet of the second flow channel 221. The fourth connector is provided with a third nozzle and a fourth nozzle, where the third nozzle is correspondingly communicated with the outlet of the first flow channel 211, and the fourth nozzle is correspondingly communicated with the outlet of the second flow channel 221.

Specifically, there are a plurality of battery modules 10, and a plurality of temperature equalization plates 30 are arranged corresponding to the battery modules 10. The third connector is located between two adjacent temperature equalization plates 30, and the fourth connector is located between two adjacent temperature equalization plates 30. For example, there are two battery modules 10, two temperature equalization plates 30 are arranged corresponding to the battery modules 10, the third connector is located between the two temperature equalization plates 30, and the fourth connector is located between the two temperature equalization plates 30.

According to some embodiments of the present application, the heat exchange assembly 20 includes a plurality of harmonica tubes arranged at intervals along the second direction, where a part of the harmonica tubes defines the first heat exchange flow channel 21, and the other part of the harmonica tubes defines the second heat exchange flow channel 22. By defining the first heat exchange flow channel 21 and the second heat exchange flow channel 22 through the harmonica tubes, the heat exchange capacity is improved.

According to some embodiments of the present application, the heat exchange assembly 20 includes a flow channel plate and a base plate. The flow channel plate is provided with flow channel grooves, and the base plate covers the open ends of the flow channel grooves to define the first heat exchange flow channel 21 and the second heat exchange flow channel 22. By arranging the base plate to cover the open ends of the flow channel grooves to define the first heat exchange flow channel 21 and the second heat exchange flow channel 22, the heat exchange capacity is improved.

The battery pack 100 according to the embodiment of the present application is described in detail below with reference to FIG. 1 to FIG. 4.

The battery pack 100 includes a battery module 10, a heat exchange assembly 20 and a temperature equalization plate 30.

There are two battery modules 10. Each battery module 10 includes a plurality of battery cells 11 stacked along a first direction F1, where the first direction F1 is the thickness direction of the battery cells 11. Each battery cell 11 extends along a second direction F2, and an electrode lead-out part is provided at an end of the battery cell 11, where the second direction F2 is the length direction of the battery cells 11. In the second direction F2, the battery module 10 has two first side edges 12 arranged opposite to each other, and the first direction F1 and the second direction F2 are perpendicular to each other.

The heat exchange assembly 20 includes a first heat exchange flow channel 21, a second heat exchange flow channel 22, a first pipe 23, a second pipe 24, a first connector 25 and a second connector 26.

There are two first heat exchange flow channels 21. The first heat exchange flow channels 21 correspond to the pole region 14 of the battery module 10 and exchange heat with the end of the battery module 10 provided with the electrode lead-out part. Each first heat exchange flow channel 21 includes two first flow channels 211 arranged at intervals along the second direction F2. The two first flow channels 211 are communicated to form a first series flow path, with one end of the first series flow path serving as an inlet and the other end serving as an outlet.

The second heat exchange flow channel 22 is located between the two first heat exchange flow channels 21, and the second heat exchange flow channel 22 exchanges heat with the part of the battery module 10 other than the end portions. The second heat exchange flow channel 22 includes four second flow channels 221 arranged at intervals along the second direction F2. Two second flow channels 221 are communicated to form a second series flow path, with one end of the second series flow path serving as an inlet and the other end serving as an outlet. The four second flow channels 221 form two second series flow paths.

One end of the first pipe 23 is communicated with the first connector 25, and the other end is communicated with the first flow channel 211. One end of the second pipe 24 is communicated with the second connector 26, and the other end is communicated with the second flow channel 221. The first connector 25 and the second connector 26 are located between the two battery modules 10 and on the same side of the battery modules 10.

Wherein, in the second direction F2, the length L of the battery cell 11 is 500 mm, the distance L1 between the side of the first heat exchange flow channel 21 facing away from the first side edge 12 and the first side edge 12 is 110 mm, the width c of the first flow channel 211 is 40 mm, the spacing d between adjacent first flow channels 211 is 10 mm, the spacing between the first flow channel 211 and the second flow channel 221 is 10 mm, the number of the first flow channels 211 in the first heat exchange flow channel 21 is 2, and the spacing a between the first heat exchange flow channel 21 and the first side edge 12 of the battery module 10 is 20 mm.

There are two temperature equalization plates 30 arranged corresponding to the two battery modules 10. The temperature equalization plates 30 are arranged between the heat exchange assembly 20 and the battery modules 10, and the temperature equalization plates 30 are adhesively bonded to the battery modules 10. The edge of the temperature equalization plate 30 is located inside the battery module 10, and the spacing b between the edge of the temperature equalization plate 30 and the first side edge 12 of the battery module 10 is 10 mm.

The first flow channel 211 and the second flow channel 221 respectively cover different heating positions of the battery module 10. The heat exchange medium enters from the inlet of the first connector, undergoes first-stage flow diversion through the first metal pipe, and flows to the two temperature equalization plates 30 respectively. Then, second-stage flow diversion is performed at each temperature equalization plate 30, and the heat exchange medium flows to the first flow channels 211 on the left and right sides. Afterwards, the heat exchange medium flows back through the first flow channel 211 on the inner side, is collected, and flows out from the outlet of the first connector. The flow mode of the heat exchange medium in the second flow channel 221 is the same as that in the first flow channel 211.

Wherein, the first pipe 23 includes a third pipe 231, a fourth pipe 2311, a fifth pipe 23111, a sixth pipe 23112, a seventh pipe 2312, an eighth pipe 23121, a ninth pipe 23122, a tenth pipe 232, an eleventh pipe 2321, a twelfth pipe 23211, a thirteenth pipe 23212, a fourteenth pipe 2322, a fifteenth pipe 23221, and a sixteenth pipe 23222. The first connector 25 is respectively communicated with the third pipe 231 and the tenth pipe 232, the third pipe 231 and the tenth pipe 232 are connected in parallel, and the heat exchange medium flows towards the two battery modules 10 respectively. The third pipe 231 is respectively communicated with the fourth pipe 2311 and the seventh pipe 2312, the fourth pipe 2311 and the seventh pipe 2312 are connected in parallel, and the heat exchange medium in the third pipe 231 is diverted into the fourth pipe 2311 and the seventh pipe 2312. The fourth pipe 2311 is respectively communicated with the fifth pipe 23111 and the sixth pipe 23112, the fifth pipe 23111 and the sixth pipe 23112 are connected in parallel, and the heat exchange medium in the fourth pipe 2311 is diverted into the fifth pipe 23111 and the sixth pipe 23112. The fifth pipe 23111 is communicated with the first flow channel 211, and the sixth pipe 23112 is communicated with the first flow channel 211. The seventh pipe 2312 is respectively communicated with the eighth pipe 23121 and the ninth pipe 23122, the eighth pipe 23121 and the ninth pipe 23122 are connected in parallel, and the heat exchange medium in the seventh pipe 2312 is diverted into the eighth pipe 23121 and the ninth pipe 23122. The eighth pipe 23121 is communicated with the first flow channel 211, and the ninth pipe 23122 is communicated with the first flow channel 211.

The tenth pipe 232 is respectively communicated with the eleventh pipe 2321 and the fourteenth pipe 2322, and the eleventh pipe 2321 and the fourteenth pipe 2322 are connected in parallel. The eleventh pipe 2321 is respectively communicated with the twelfth pipe 23211 and the thirteenth pipe 23212, the twelfth pipe 23211 and the thirteenth pipe 23212 are connected in parallel, the twelfth pipe 23211 is communicated with the first flow channel 211, and the thirteenth pipe 23212 is communicated with the first flow channel 211. The eleventh pipe 2321 collects the heat exchange medium in the twelfth pipe 23211 and the thirteenth pipe 23212. The fourteenth pipe 2322 is respectively communicated with the fifteenth pipe 23221 and the sixteenth pipe 23222, the fifteenth pipe 23221 and the sixteenth pipe 23222 are connected in parallel, the fifteenth pipe 23221 is communicated with the first flow channel 211, and the sixteenth pipe 23222 is communicated with the first flow channel 211. The fourteenth pipe 2322 collects the heat exchange medium in the fifteenth pipe 23221 and the sixteenth pipe 23222. Finally, the tenth pipe 232 collects the heat exchange medium in the eleventh pipe 2321 and the fourteenth pipe 2322 and discharges it to the first connector 25.

Wherein, the second pipe 24 includes a seventeenth pipe 241, an eighteenth pipe 2411, a nineteenth pipe 24111, a twentieth pipe 24112, a twenty-first pipe 2412, a twenty-second pipe 24121, a twenty-third pipe 24122, a twenty-fourth pipe 242, a twenty-fifth pipe 2421, a twenty-sixth pipe 21211, a twenty-seventh pipe 24212, a twenty-eighth pipe 2422, a twenty-ninth pipe 24221, and a thirtieth pipe 24222. The second connector 26 is respectively communicated with the seventeenth pipe 241 and the twenty-fourth pipe 242, the seventeenth pipe 241 and the twenty-fourth pipe 242 are connected in parallel, and the heat exchange medium flows towards the two battery modules 10 respectively. The seventeenth pipe 241 is respectively communicated with the eighteenth pipe 2411 and the twenty-first pipe 2412, the eighteenth pipe 2411 and the twenty-first pipe 2412 are connected in parallel, and the heat exchange medium in the seventeenth pipe 241 is diverted into the eighteenth pipe 2411 and the twenty-first pipe 2412. The eighteenth pipe 2411 is respectively communicated with the nineteenth pipe 24111 and the twentieth pipe 24112, the nineteenth pipe 24111 and the twentieth pipe 24112 are connected in parallel, and the heat exchange medium in the eighteenth pipe 2411 is diverted into the nineteenth pipe 24111 and the twentieth pipe 24112. The nineteenth pipe 24111 is communicated with the second flow channel 221, and the twentieth pipe 24112 is communicated with the second flow channel 221. The twenty-first pipe 2412 is respectively communicated with the twenty-second pipe 24121 and the twenty-third pipe 24122, the twenty-second pipe 24121 and the twenty-third pipe 24122 are connected in parallel, and the heat exchange medium in the twenty-first pipe 2412 is diverted into the twenty-second pipe 24121 and the twenty-third pipe 24122. The twenty-second pipe 24121 is communicated with the second flow channel 221, and the twenty-third pipe 24122 is communicated with the second flow channel 221.

The twenty-fourth pipe 242 is respectively communicated with the twenty-fifth pipe 2421 and the twenty-eighth pipe 2422, and the twenty-fifth pipe 2421 and the twenty-eighth pipe 2422 are connected in parallel. The twenty-fifth pipe 2421 is respectively communicated with the twenty-sixth pipe 24211 and the twenty-seventh pipe 24212, the twenty-sixth pipe 24211 and the twenty-seventh pipe 24212 are connected in parallel, the twenty-sixth pipe 24211 is communicated with the second flow channel 221, and the twenty-seventh pipe 24212 is communicated with the second flow channel 221. The twenty-fifth pipe 2421 collects the heat exchange medium in the twenty-sixth pipe 24211 and the twenty-seventh pipe 24212. The twenty-eighth pipe 2422 is respectively communicated with the twenty-ninth pipe 24221 and the thirtieth pipe 24222, the twenty-ninth pipe 24221 and the thirtieth pipe 24222 are connected in parallel, the twenty-ninth pipe 24221 is communicated with the second flow channel 221, and the thirtieth pipe 24222 is communicated with the second flow channel 221. The twenty-eighth pipe 2422 collects the heat exchange medium in the twenty-ninth pipe 24221 and the thirtieth pipe 24222. Finally, the twenty-fourth pipe 242 collects the heat exchange medium in the twenty-fifth pipe 2421 and the twenty-eighth pipe 2422 and discharges it to the second connector 26.

The first flow channel 211 and the second flow channel 221 are communicated with the air conditioning subsystem through the first connector 25 and the second connector 26. The first connector 25 and the second connector 26 are arranged at the central position of the two temperature equalization plates 30, which is suitable for vehicles with inlet and outlet water pumps arranged on the same side, and meanwhile can make the flow diversion from the connectors to the two battery modules 10 more uniform. When the battery pack 100 needs to be cooled, the heat exchange medium in the air conditioning subsystem flows into the inlet on the first connector 25 and the inlet on the second connector 26, so as to achieve the effect of cooling the battery pack 100. Under fast charging conditions, the electrode lead-out parts at both ends of the battery cell 11 generate relatively more heat, and the system can distribute more heat exchange medium to the first flow channel 211, so that both ends of the battery module 10 can be effectively and rapidly cooled, while only a small amount of refrigerant needs to be distributed to the second flow channel 221. The distribution of the heat exchange medium between the first flow channel 211 and the second flow channel 221 can be dynamically adjusted according to the heat generation of the battery module 10.

The present application has the following advantages: more targeted temperature regulation, which alleviates the problem of large temperature differences between different parts of the battery module 10; integrated control and management of the cooling of multiple rows of battery modules 10, enabling flexible arrangement of flow channels and heat exchange medium according to the arrangement of the battery cells 11, with the cooling power dynamically matching the heat generation of the battery modules 10 in real time; freely combinable harmonica tubes, which can enhance the mechanical strength without compromising the lightweight design; the reflow-type flow channel design reduces the number of flow diversions and enables better control over the flow rate of the heat exchange medium.

An electrical device 1000 according to an embodiment of the present application includes the above-mentioned battery pack 100.

The battery pack 100 supplies electric energy to the electrical device 1000. For example, if the electrical device is a vehicle, the battery pack 100 provides electric energy for the vehicle.

According to the electrical device 1000 of the embodiment of the present application, by arranging the first heat exchange flow channel 21 corresponding to the end of the battery module 10 provided with the electrode lead-out part, where the first heat exchange flow channel 21 satisfies 0.2L≤L1, the first heat exchange flow channel 21 can well cover the end of the battery module 10 provided with the electrode lead-out part, and the heat exchange assembly 20 can control the temperature of the battery module 10 more targeted, thus alleviating the problem of large temperature differences between different parts of the battery module 10.

Other structures and operations of the battery pack 100 according to the embodiments of the present application are known to those of ordinary skill in the art, and will not be described in detail herein.

In the description of this specification, reference to the terms "one embodiment", "some embodiments", "exemplary embodiment", "example", "specific example", or "some examples" means that a particular feature, structure, material, or characteristic described in connection with the embodiment or example is included in at least one embodiment or example of the present application. In this specification, the illustrative expressions of the above terms do not necessarily refer to the same embodiment or example. Furthermore, the particular features, structures, materials, or characteristics described may be combined in any suitable manner in any one or more embodiments or examples.

Although the embodiments of the present application have been shown and described, those of ordinary skill in the art can understand that various changes, modifications, substitutions and variations can be made to these embodiments without departing from the principle and spirit of the present application, and the scope of the present application is defined by the claims and their equivalents.

## Claims

1. A battery pack (100), comprising:
a battery module (10), the battery module (10) comprising a plurality of battery cells (11) arranged in a first direction, each battery cell (11) extending in a second direction and having an electrode lead-out part disposed at an end portion thereof, in the second direction, the end portion of the battery module (10) with the electrode lead-out part arranged thereon having a first side edge (12), the first direction and the second direction being perpendicular to each other;
a heat exchange assembly (20), the heat exchange assembly (20) comprising a first heat exchange flow channel (21) and a second heat exchange flow channel (22) not in communication with each other, the first heat exchange flow channel (21) exchanging heat with the end portion with the electrode lead-out part arranged thereon, the second heat exchange flow channel (22) being located on a side of the first heat exchange flow channel (21) away from the first side edge (12), in the second direction, the length of the battery cell (11) being L, the distance between the side of the first heat exchange flow channel (21) away from the first side edge (12) and the first side edge (12) being L1, the battery pack (100) satisfying: 0.2L ≤ L1.

2. The battery pack (100) according to claim 1, wherein the battery pack (100) satisfies: 0.2L ≤ L1 ≤ 0.4L.

3. The battery pack (100) according to claim 1 or 2, wherein a distance between the side of the first heat exchange flow channel (21) facing the first side edge (12) and the first side edge (12) of the battery module (10) is a, and a satisfies a ≤ 25 mm.

4. The battery pack (100) according to claim 3, wherein a satisfies 15 mm ≤ a ≤ 25 mm.

5. The battery pack (100) according to claim 3 or 4, wherein the first heat exchange flow channel (21) comprises a plurality of first flow channels (211) spaced apart along the second direction, and the width of the first flow channel (211) is c, the spacing between adjacent first flow channels (211) is d, the number of the first flow channels (211) in the first heat exchange flow channel (21) is n, and L1=nc+(n-1)d+a.

6. The battery pack (100) according to claim 5, wherein c satisfies 40 mm ≤ c ≤ 70 mm.

7. The battery pack (100) according to claim 5 or 6, wherein at least two of the first flow channels (211) are in communication to form a first series flow path, and one end of the first series flow path is an inlet and the other end is an outlet.

8. The battery pack (100) according to claim 5 or 6, wherein the plurality of first flow channels (211) are connected in parallel.

9. The battery pack (100) according to any one of claims 1 to 8, wherein the battery pack further comprises a thermally conductive temperature equalization plate (30), and the temperature equalization plate (30) is disposed between the heat exchange assembly (20) and the battery module (10).

10. The battery pack (100) according to claim 9, wherein the orthographic projection of the edge of the temperature equalization plate (30) facing the first side edge (12) on the surface of the battery module (10) facing the temperature equalization plate (30) is located inside the first side edge (12) of the battery module (10).

11. The battery pack (100) according to claim 10, wherein a distance between the edge of the temperature equalization plate (30) facing the first side edge (12) and the first side edge (12) is b, and a distance between the side of the first heat exchange flow channel (21) facing the first side edge (12) and the first side edge (12) of the battery module (10) is a, and b < a.

12. The battery pack (100) according to claim 11, wherein b satisfies 10 mm ≤ b ≤ 15 mm.

13. The battery pack (100) according to any one of claims 1 to 12, wherein in the second direction, the battery module (10) has two first side edges (12) disposed opposite to each other, and the first heat exchange flow channels (21) are disposed between both sides of the second heat exchange flow channel (22) and the corresponding first side edges (12).

14. The battery pack (100) according to any one of claims 1 to 13, wherein the second heat exchange flow channel (22) comprises a plurality of second flow channels (221) spaced apart along the second direction.

15. The battery pack (100) according to claim 14, wherein at least two of the second flow channels (221) are in communication to form a second series flow path, and one end of the second series flow path is an inlet and the other end is an outlet; or
the plurality of second flow channels (221) are connected in parallel.

16. The battery pack (100) according to any one of claims 1 to 15, wherein the battery pack (100) comprises a plurality of battery modules (10), and the first heat exchange flow channel (21) and the second heat exchange flow channel (22) are disposed corresponding to each battery module (10).

17. The battery pack (100) according to claim 16, wherein a plurality of the first heat exchange flow channels (21) corresponding to the battery modules (10) are connected in parallel, and a plurality of the second heat exchange flow channels (22) are connected in parallel.

18. The battery pack (100) according to any one of claims 1 to 17, wherein the heat exchange assembly (20) comprises a plurality of harmonica tubes spaced apart along the second direction, and a portion of the harmonica tubes define the first heat exchange flow channel (21), and another portion of the harmonica tubes define the second heat exchange flow channel (22).

19. The battery pack (100) according to any one of claims 1 to 17, wherein the heat exchange assembly (20) comprises a flow channel plate and a base plate, the flow channel plate is formed with a flow channel groove therein, and the base plate covers an opening of the flow channel groove to define the first heat exchange flow channel (21) and the second heat exchange flow channel (22).

20. An electrical device (1000), comprising the battery pack (100) according to any one of claims 1 to 19.
